# EUROPEAN PATENT SPECIFICATION

(11) **EP 3 441 699 B1**
(45) Date of publication and mention of the grant of the patent: **07.06.2023**
(21) Application number: 18177151.0
(22) Date of filing: 12.06.2018
(51) Int. Cl.: F25D 3/12, B64D 11/00, F25D 16/00

(54) **COOLING APPARATUS AND METHOD**
KÜHLVORRICHTUNG UND -VERFAHREN
APPAREIL ET PROCÉDÉ DE REFROIDISSEMENT

(30) Priority: 19.06.2017 FI 20175568
(43) Date of publication of application: 13.02.2019
(73) Proprietor: Icebridge OY, 04360 Tuusula (FI)
(72) Inventor: AUREKOSKI, Jarmo, 04320 Tuusula (FI)
(74) Representative: Laine IP Oy

(56) References cited:
- EP-A2- 2 034 257
- US-A- 4 397 159

## Description

### FIELD

This invention relates to cooling devices and methods for trolleys, especially trolleys for aircrafts.

### BACKGROUND

Trolley is known as a unit for transporting articles inside the aircraft, train or on another moving vessel. New magnetocaloric trolley will be equipped with conductive metal alloy sheet located in the back wall or on the front door of such trolley. The conductive metal sheet is manufactured from an alloy, combination of Gadolinium, (Gd) and aluminum, stainless steel, copper or other thermally conductive metal. The Cooling device (Hereinafter: Cooling unit assembly) will be attached to back wall or front door or doors of the trolley to start cooling process. Cooling device (Hereinafter: The Insert) is manufactured from efficient thermally insulated nano material, such as Vacuum insulated panel, Aerogel blanket, Aerogel granules and with or without Polyurethane insulation foam inside a plastic or carbon fiber surrounded casing. The Insert accommodates a thin metal insert plate combined with a panel housing magnets . Panel designed for magnetic connection between the trolley conductive metal sheet and the Cooling unit assembly.

Aircraft trolleys are designed and manufactured for food, beverage and other items transportation from the Catering kitchen located on the ground at the airport area, to the aircraft. Conventional and known aircraft trolleys are designed for food and beverage transportation. They are often equipped with permanent device on the upper part of the trolley commonly called a "dry ice tray" or "dry ice drawer" (Hereinafter: "dry ice tray") 4, to accommodate dry ice for keeping the perishables on desired temperature during the transportation. The challenge of such "dry Ice tray" is the distribution of even cold air throughout the trolley. Current solutions often leave the middle- and the lowest part of the trolley warmer than the area close to dry ice. The cold air will not reach the bottom of the trolley due to several obstacles underneath, drawers, trays, etc.

Often the perishables that located near the "dry ice tray" in the upper part of the trolley are fully frozen and not suitable for straight human consumption without melting or heating such items in the aircraft oven.

The cooling performance of such "dry ice tray" system in insufficient and unstable for long term food transportation, yet widely used on the various trolley models world wide.

Dry ice is known as carbon dioxide CO₂, that is recovered from the industrial use and is used on it's a solid form with holding the temperature of insert casing -78,5°C degrees. Dry ice has been used world wide by the airlines and catering companies for decades. Dry ice will sublimate totally in the air during the usage. 1 Kg of dry ice will sublimate 530 L carbon dioxide CO₂ gas. Dry ice will slow down the food bacteria growth close to it, since carbon dioxide will replace oxygen when exposed to same area. Dry ice is commonly manufactured in forms of pellets, slices and blocks. Aviation and catering industry preference is often the standard size Dry ice block.

Alternative and known cooling solution instead of dry ice tray, can be provided by inserting insulation containers inside the trolleys to keep the perishables cold and fresh. Inside these insulation containers one can use eutectic phase change cooling plates or gel packs designed for food chilling to maintain the sufficient cold air inside container.

Similar solutions are known as EP2117929.

The space- and weight savings demand have set limits to additional equipment that can be used in the aircrafts.

Aircraft kitchens (Hereinafter: Galleys) have limited and continuously reduced space that is reserved for the passengers' food. Creating the sufficient cooling methods to cover and secure all passenger meals is very difficult. The increased weight generated by the additional cooling methods and devices is under critical evaluation at the airlines. One additional kilogram (1,0 Kg) of weight per flight will cost approximately 70 - 100 € / year for the airline operator in the means of increased kerosene consumption.

It is common that airline operators load the passenger meals from the departing home base also for the returning flight. These meals will be consumed after 4 - 8 hours from the original departure and keeping these meals sufficiently cooled is a major challenge for the operators.

It is also common that airlines sell food and beverages to passengers instead of giving them free of charge for all passengers. Estimating and forecasting the customer behavior and the food and beverage consumption on each flight is challenging and very often resulted as significant food wastage after the operated flight due to the unsold items. Using the unsold items on the following flights or on the next day is very difficult due to the insufficient cold chain management and unexpected changes on the airline route network or daily aircraft management.

Aircraft trolleys 1, 2 are commonly manufactured from aluminum, plastic, composite or combination of such materials. Aluminum is commonly anodized for better outlook, lower oxidation of surfaces and stronger durability.

Plastic is commonly used due to the easier manufacturing molding process and lighter materials. The plastic trolleys are often also tougher due to the better shock absorption. The thermal insulation properties of the conventional airline trolleys are very weak and the perishables loaded inside them will not maintain chilled for more than 4 -6 hours without any additional, external cooling devices or cooling systems or permanent aircraft chilled refrigerators. US4397159A discloses a trolley for an aircraft galley. EP2034257A2 discloses an apparatus according to the preamble of claim 1.

### SUMMARY OF THE INVENTION

The invention is defined by the features of the independent claims. Some specific embodiments are defined in the dependent claims.

According to a first aspect of the present invention, there is provided an apparatus comprising a cooling unit including at least one container for dry ice, permanent magnets on the outer surface at least one metal plate including Gadolinium detachably in connection with the magnets of the cooling unit.

### BRIEF DESCRIPTION OF THE DRAWINGS

FIG. 1 shows the assembly of the magnetocaloric cooling units inside the Half size Airline trolley in accordance with at least some embodiments of the present invention;
FIG. 2 shows the composition of the Insulation Insert casing in accordance with at least some embodiments of the present invention;
Fig. 3 shows the layout of the aviation full size trolley in accordance with at least some embodiments of the present invention;
FIG. 4 shows the details on the Insert unit which is connected to trolley back wall or doors to create the magnetocaloric cooling phenomenon in accordance with at least some embodiments of the present invention; and
FIG. 5 shows the installation principal on the Cooling unit in accordance with at least some embodiments of the present invention;

### EMBODIMENTS

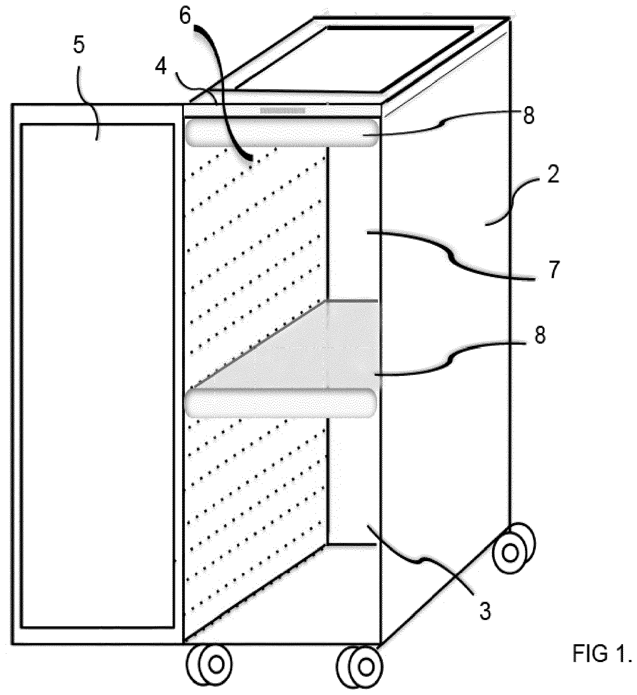

The present innovation relates to a magnetocaloric cooling unit assembly in accordance with figure 1, comprising conductive metal sheet 7, insert casing 8 with a plastic front panel 9 and a thin thermally conductive metal plate 10 inside the insert casing 8. The combination of insert casing 8 functionally connected to metal sheet 7 is called cooling unit assembly when connected to integrated in an conventional aircraft trolley 2. This cooling unit assembly utilizes the magnetic magnetocaloric cooling phenomenon during the cooling process of the trolley and food inside.

The cooling Unit assembly 16 comprises conductive metal sheet 7, and insert casing 8 comprising a plastic front panel 9 and thermally conductive metal plate 10 and permanent magnets 11. The metal sheet 7 is made of thin and long conductive metal alloy sheet 7 manufactured from alloy of Gadolinium and Aluminum, steel, iron, copper or other commonly used thermally conductive metal The metal alloy sheet is located either in the back wall or on the front door of the Trolley(s) 1, 2. The metal sheet 7 comprising Gadolinium is connected by magnets to an insert casing 8, holding a thin metal plate 10 with a typically plastic front panel 9 with integrated magnets 11 inside the panel 9. The conductive metal sheet 7 will connect together with the plastic front panel 9 of the insert casing 8 including a thermally conductive metal plate with magnetic connection on certain temperature conditions. The connection is known as magnetocaloric phenomenon. In figure 1 the magnets 11 of the insert casing 8 are close to the back wall 3 of the trolley 2 and when the insert casings 8 are positioned inside the trolley 2, the permanent magnets 11 are in contact with the metal sheet 7 comprising Gadolinium positioned on the back wall of the trolley 2. Insert casings are positioned on horizontal rails 6 inside of the trolley 2. A standard trolley also comprises typically a dry ice tray 4 on the top of the trolley 2.

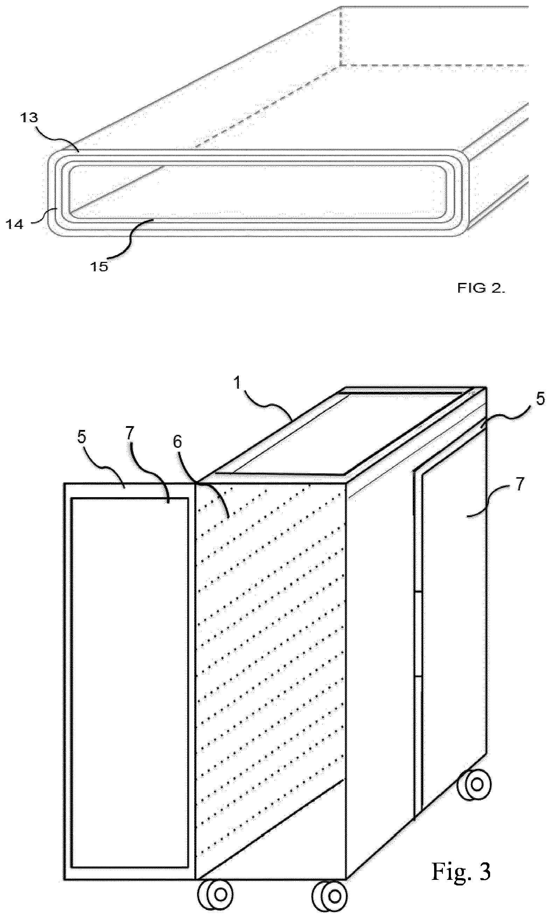

In accordance with figure 2 the insert casing 8 is typically formed of a sandwich structure comprising inside layer 15, insulation material 14 and outside layer 13.

In accordance with figure 3 a full size trolley may have two metal sheets 7 comprising gadolinium, one connected to front door 5 and another connected to back door 5. Of course the insert casing 8 has magnets 11 positioned such that they contact these metal plates 7 when the insert casing is positioned inside the trolley 8 and the doors 5 are shut.

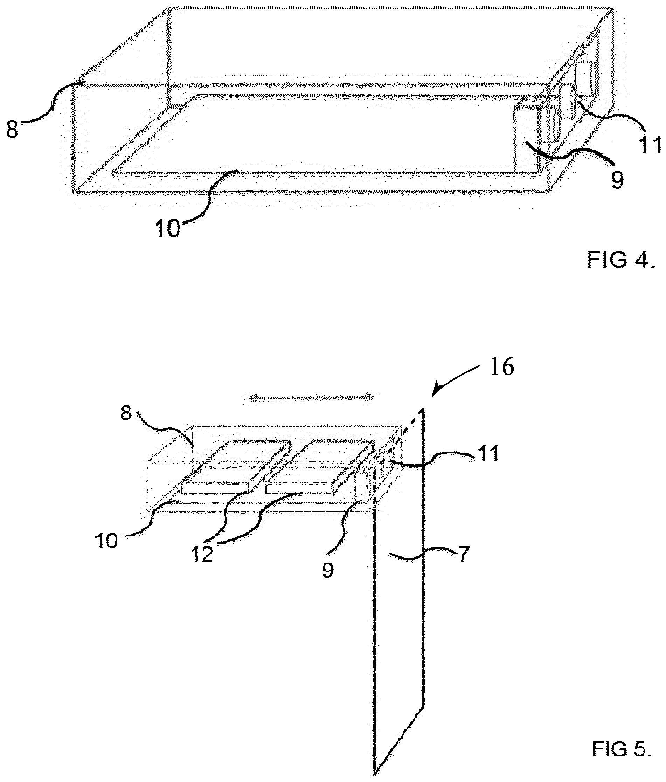

In accordance with figure 4 the insert casing 8 has a thermally conducting plate 10, typically a metal plate 10 in the bottom of the casing for conducting thermal energy inside the insert casing. In practice the metal plate 10 conducts the cooling effect of the cooling sources 12. At one end the permanent magnets 11 are positioned inside a typically plastic front panel 9. The insert casing 8 is also called cooling unit in this application.

In accordance with figure 5 when the trolley door is closed and the door inside has the metal sheet 7 comprising gadolinium, the insert casing 8 containing dry ice 12 connects with magnets 11. Due to the dry ice 12 the temperature inside the trolley eventually decreases below 16°C. Because of the magnetocaloric phenomenon the gadolinium heats up in magnetic field in temperatures below 16°C and cools down when the magnetic field disappears. Therefore the cooling unit assembly 19 of figure 5 starts cooling down when the door including the metal sheet 7 comprising gadolinium opens. This cooling happens the right moment when the door including the metal sheet 7 comprising gadolinium loses contact with the magnets 11. The cooling happens in the metal sheet 7 comprising gadolinium. Especially strong this effect is with gadoliniumin Gd₅(Si₂Ge₂) -alloy.

Relevant to this innovation is that the cooling unit assembly 16 comprising conductive metal sheet 7 and insert casing 8 with plastic front panel 9, thermally conductive metal plate 10 and permanent magnet 11 can be manufactured to all new aircraft trolley 1, 2 models on the market.

The conventional trolleys 1, 2 can be manufactured from plastics, composites, various metals such as aluminum or any other materials common to aviation industry.

In other words the inside back wall 3 (Fig 1.) or the front doors 5 (Fig. 3) of the conventional aircraft trolley 1, 2 will be equipped with a long thin conductive metal alloy sheet 7 manufactured from gadolinium as such or in form of alloy together with at least one of the following materials: aluminum, stainless steel, copper, iron or similar commonly used thermally conductive metals used on aviation industry.

The metal sheet 7 will be permanently installed inside the Trolley 1, 2 typically as a fixed part of such Trolley. The trolley 1, 2 with the cooling unit assembly 16 including conductive metal sheet 7 and an insert casing 8 further including plastic front panel 9 and thermally conductive metal plate 10 and permanent magnets 11 inside can be manufactured as "Half Size" trolley of figure 1, which means that it can commonly accommodate up to fourteen full size passenger meal trays and will reserve 50% space in the aircraft kitchen, on the space reserved for an airline trolley.

In case of a trolley is manufactured as "Full Size" trolley 1 of figure 3, with cooling unit assembly 16 comprising conductive metal sheet 7 and insert casing 8 with plastic front panel 9, thermally conductive metal plate 10 and permanent magnets 11 positioned such that they contact the metal sheet 7 comprising gadolinium when the trolley doors are closed, the inside the trolley can commonly accommodate up to twenty-eight full size passenger meal trays within.

Commonly, inside a "full size" trolley 1 there is no fixed vertical metal plate or middle wall in the middle of the trolley, since the space is open throughout the trolley.

A fixed metal structure can also be located inside the "Full size" Trolley 1 on a horizontal position inside such trolley approximately on the middle part of the trolley. Also in case of "full size" trolley 1, the metal sheet 7 of the cooling unit assembly 16 may be located on the trolley doors 5 instead of trolley back wall.

The gadolinium, chemical element with symbol Gd and atomic number 64, is a silvery-white, malleable, and ductile rare earth metal. It is found in nature only in oxidized form, and even when separated, it usually has impurities of the other rare earths. In form of gadoliniumin Gd₅(Si₂Ge₂) the magnetocaloric phenomenon is strongest in accordance with the present knowledge.

Gadolinium is considered as paramagnetic on the room temperature but will transform to Ferromagnetic on the temperatures below +16°C Degrees.

When Gadolinium transforms to ferromagnetic and is exposed to magnetic field, it will start warming and correspondingly cools down when removed from magnetic field. This magnetocaloric phenomenon is a reversible process. During exposure to the magnetic field, the warmed or heated Gadolinium alloy sheet, the conductive metal sheet 7 will be cooled down efficiently by using dry ice 12 that is located inside the insert casing 8 including plastic front panel 9 and thermally conductive metal plate 10 and permanent magnets 11 in the front panel 9. The magnets 11 are in this position connected to the metal conductive sheet 7 located in the back wall 3 of the trolley or on the front doors of the trolley 5.

The connection between the conductive metal sheet 7 and the insert casing 8 with permanent magnets will be magnetic during certain temperatures, especially under +16°C degrees. On higher temperatures above +17°C, the cooling unit assembly 16 can be disassembled easily due to the lack of magnetic field between the metal sheet 7 and the insert casing 8 with the permanent magnets 11.

Dry ice blocks 12 are often manufactured as 0,5 Kg or 1,0 Kg rectangular sizes and will be placed inside the Insert casing 8. Referring again to figure 2, the covers of the insert casing 8 are typically manufactured from plastics or composites silicon 13, inside layer 15 of the insert casing and insulation layer 14 of vacuum insulation panels, aerogel blankets, aerogel granules or other efficient insulation material, such as polyurethane foam or other thermally insulated foam between the cover 13 and inner layer 15.

The Insert casing 8, will be manufactured from injection molded, thermoformed or otherwise thermally vacuumed plastics or composites with insulation material inside as a "three layer sandwich structure" outside layer 13, insulation material 14, inside layer 15 of the insert casing 8.

The inside layer 15 of the Insert casing 8 can be also manufactured from metal, such as aluminum, steel, copper, iron or other, commonly used thermally conductive metal, carbon fiber or other thermally conductive material.

Polyurethane foam may be used inside area 14 of the Insert casing 8, as such or to fill in empty and non-insulated areas 14 inside the Insert casing 8. The Insert casing 8 edges will be sealed for water proof by gluing or by silicone, inside layer 15 of the insert casing.

Commonly used Vacuum insulation panel or similar panel 14 is a very efficient thermal insulation material with thermal conductivity on 0,0036 W/(m K).

The insert casing 8 of figures 4 and 5, manufactured as 3-layer sandwich structure of outside layer 13, insulation material 14, inside layer 15 of the insert casing can accommodate typically maximum 2,0 kg dry ice, preferably 2 pcs 1,0 Kg Dry ice blocks. Also dry ice pellets can be used. The Insert casing 8 will hold a thin metal plate conductor 10 on the bottom of the Insert casing 8. The metal plate conductor 10 is manufactured from metal, such as aluminum, stainless steel, iron, carbon fiber-metal combination or similar, commonly used thermally conductive material. Such thin metal plate 10 will typically be integrated with a plastic front panel 9 housing magnets 11 inside the panel, located on the other end of such metal plate 10.

Thin metal plate integrated unit composed of metal plate 10 and plastic front panel 9, is connected to the insert casing 8. The metal plate 10 is positioned so that it remains under the dry ice blocks 12 so, that the metal plate 10 conductor is in immediate contact with dry ice 12. When dry ice 12 blocks or pellets and the metal plate 10 conductor integrated with the plastic front panel 9 are placed on the Insert casing 8, the Insert unit 8 with plastic front panel 9, thermally conductive metal plate 10 and permanent magnets 11 will be tightly closed and the unit is placed inside the aircraft trolley 1 or 2 on the trolley meal tray runners or trolley rails 6.

In case the ambient temperature is lower than +16°C, the Insert unit 8, will connect magnetically to the metal sheet 7 located on the trolley back wall 3 or front doors 5, creating a magnetic field between them. This phenomenon is called a magnetocaloric phenomenon

During the exposure to magnetic field, the usually randomly located metal atoms inside the metal alloy material will be positioned towards the same direction, causing the warming or heating phenomenon of such metal material, in this case the metal sheet 7.

When the magnetic field is removed, or when the ambient temperature exceeds +17°C during the absence of dry ice 12 inside the Insert casing 8, the metal atoms will be spread to random directions, causing the material, in this case the metal sheet 7, to cool down.

During the warming of the metal sheet 7 of the cooling unit assembly 16, the dry ice 12 that is located is inside the insert casing 8, will also cool down the already warmed magnets 11 on the plastic front panel 9 and the metal sheet 7 on the back wall 3 or on the front doors 5 of the trolley 1, 2. The warm air inside the meal trolley 1, 2 will conduct via the metal sheet 7 or sheets on the trolley 1, 2 and via the plastic front panel 9, magnets 11 and insert casing 8, towards the deep frozen dry ice 12. The cooling of the trolley 1, 2 will continue as long as the insert casing 8 is connected to the metal sheet 7 and the dry ice 12 still exists. Advantageously the magnets 11 are in direct thermal contact both with the inside of insert casing 8 and the metal sheet 7.

The even cooling throughout the trolley 1, 2 will occur, since the vertical conductive metal sheet 7 covers the whole back wall 3 or front door 5 of the trolley 1 , 2 and the warm air from the trolley will conduct via the metal plate 7 towards the dry ice. The warm will go towards the cold by physics law, and this phenomenon does not need any electricity to function. Similar functionality can be found on commercial home refrigerators that will operate with electricity.

When trolley 1, 2 doors 5 are opened and / or magnetic connection is removed between the magnets 11 and thin conductive metal alloy sheet 7 manufactured from gadolinium of the cooling unit 16, the more efficient cooling of the vertical conductive metal sheet 7 will start. The removal of the magnetic field will cause significant cooling effect of the vertical conductive metal alloy sheet 7 inside the trolley.

When the trolley doors 5 are closed again or the cooling unit 8 including a plastic front panel 9, thermally conductive metal plate 10 and permanent magnets 11 connected again onto the vertical conductive metal sheet 7, the magnets 11 inside the plastic front panel 9 and the metal conductive sheet 7 will warm up again and the whole cooling unit assembly 7, insert casing 8, plastic front panel 9, thermally conductive metal plate 10, permanent magnet 11 will be cooled down again with the dry ice 12 that is located inside the Insert casing 8.

Such process is reversible process and will continue performing as long as dry ice has fully evaporated / sublimated from the Insert casing 8.

Depending of the cooling requirements and the duration, the operator can use 1-3 pcs insert units 8 per "Half size" trolley 2 and 2-6 pcs inserts casing 8 per "Full size" trolley 1.

The cooling unit assembly 16 containing insert unit 8 and the conductive metal alloy sheet 7 including gadolinium. The same conductive metal sheet 7 can be used with several insert units 8 simultaneously to maximize the cooling performance.

The trolley containing the conductive metal sheet 7 located on the back wall 3 or on the front doors 5, can also be used with or without the insert unit 8. With the insert unit 8 the trolley can be used for transporting the perishables on food safe temperatures between +1,0° - +8°C Degrees. Without inserts 8 the trolley can be used for transporting other items, such as beverages, duty free sales products, cutlery, condiments, napkins, etc.

Small permanent magnets 11 will be used for creating the magnetic field between the Insert panel 9 and the trolley conductive Metal plate 7. The International Air Transport Association IATA regulates the transportation of the magnets and the maximum power of such magnets. The magnets can be of any type of magnets, such Neodymium or Ferrite magnets.

Regulation: IATA Dangerous Goods Regulation, 57th edition / 2016.

The maximum power / magnetic field of a magnet that is transported on an aircraft is 0,00525 Gauss (0,5 uT) from the distance of 4,6 meters. If connection is up to this level, the magnet is considered as dangerous goods and transportation of such material is regulated by IATA. I case the magnet power / magnetic field is less than 0,002 Gauss from the distance of 2,15 meters, the magnet is not considered as magnetic or dangerous goods regulated by IATA.

Small magnets are currently used on airline trolleys to keep the door 5 on place when opened. The magnets are located inside the trolley wall structures and a ferromagnetic metal part is located on the door 5 structure.

Magnetized material (IATA): As of 2003, the IATA's classification and definition of "magnetized material" was "any material which, when packed for air transport, has a magnetic field strength of 0.002 G or more at a distance of 7 ft. from any point on the surface of the package."

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention is industrially applicable in aircraft trolley.

### REFERENCE SIGNS LIST

- 1: full size trolley
- 2: half size trolley
- 3: back wall
- 4: dry ice tray
- 5: front door
- 6: trolley rail
- 7: conductive metal alloy sheet
- 8: insulated insert casing, cooling unit
- 9: plastic front panel
- 10: a thin thermally conductive metal plate
- 11: permanent magnet
- 12: dry ice
- 13: outside layer
- 14: insulation material
- 15: inside layer of the Insert casing
- 16: cooling unit assembly

## Claims

1. An apparatus comprising:
- a cooling unit (8) including
∘ at least one container for dry ice (12), **characterized by**
o permanent magnets (11) on the outer surface ;
- at least one metal plate (7) including Gadolinium detachably in connection with the magnets (11) of the cooling unit (8).

2. An apparatus in accordance with claim 1, **characterized in that** the metal plate includes gadoliniumin Gd₅(Si₂Ge₂) -alloy or an alloy of gadoliniumin with at least one of the following materials: aluminum, steel, copper, iron or other similar thermally conductive metal.

3. An apparatus in accordance with claim 1or 2, **characterized in that** the cooling unit includes an insulation layer (14) between outside layer (13) and inner layer (15), the insulation layer (14) including at least one of the following materials: vacuum insulation panels, aerogel blankets, aerogel granules or other efficient insulation material, such as polyurethane foam or other thermally insulated foam.

4. An apparatus in accordance with any previous claim, **characterized in that** the cooling unit (8) is manufactured from injection molded, thermoformed or otherwise thermally vacuumed plastics or composites with insulation material inside.

5. An apparatus in accordance with any previous claim, **characterized in that** an inside layer (15) of the cooling unit (8) is manufactured from metal, such as aluminum, steel, copper, iron or other, commonly used thermally conductive metal, carbon fiber or other thermally conductive material.

6. An apparatus in accordance with any previous claim, **characterized in that** an insulation layer (14) has thermal conductivity less than 0,02 W/(m K).

7. An apparatus in accordance with any previous claim, **characterized in that** the magnets (11) has a magnetic field strength less than 0.002 G a distance of 7 ft. from any point on the surface of the package.

8. An apparatus in accordance with any previous claim, **characterized in that** the apparatus is positioned inside of an aircraft trolley (1, 2).

9. An apparatus in accordance with any previous claim, **characterized in that** the at least one metal plate (7) including Gadolinium is permanently connected on the back wall of an airline trolley (1, 2) or on the front door of the trolley (1, 2).

10. An apparatus in accordance with any previous claim, **characterized in that** magnets (11) are in direct thermal contact both with the inside of the cooling unit (8) and the metal sheet (7).

11. A method, in which
a cooling unit (8) including
o at least one container for dry ice (12),
o permanent magnets (11) on the outer surface,
is arranged in connection with at least one metal plate (7) including Gadolinium through detachable connection with the magnets (11) of the cooling unit (8).

12. A method in accordance with claim 11, **characterized in that** the metal plate includes gadoliniumin Gd₅(Si₂Ge₂) -alloy or an alloy of gadoliniumin with at least one of the following materials: aluminum, steel, copper, iron or other similar thermally conductive metal.

13. A method in accordance with claim 11or 12, **characterized in that** the cooling unit includes an insulation layer (14) between outside layer (13) and inner layer (15), the insulation layer (14) including at least one of the following materials: vacuum insulation panels, aerogel blankets, aerogel granules or other efficient insulation material, such as polyurethane foam or other thermally insulated foam.

14. A method in accordance with any previous method claim, **characterized in that** the cooling unit (8) is manufactured from injection molded, thermoformed or otherwise thermally vacuumed plastics or composites with insulation material inside.

15. A method in accordance with any previous method claim, **characterized in that** an inside layer (15) of the cooling unit (8) is manufactured from metal, such as aluminum, steel, copper, iron or other, commonly used thermally conductive metal, carbon fiber or other thermally conductive material.

## Patentansprüche

1. Einrichtung, umfassend:
- eine Kühleinheit (8), einschließlich
- mindestens eines Behälters für Trockeneis (12), **gekennzeichnet durch**
- Permanentmagnete (11) auf der Außenoberfläche;
- mindestens einer Metallplatte (7), die Gadolinium einschließt und die lösbar mit den Magneten (11) der Kühleinheit (8) verbunden ist.

2. Einrichtung nach Anspruch 1, **dadurch gekennzeichnet, dass** die Metallplatte Gadoliniumin Gd₅(Si₂Ge₂)-Legierung oder eine Legierung von Gadoliniumin mit mindestens einem der folgenden Materialien einschließt: Aluminium, Stahl, Kupfer, Eisen oder einem anderen ähnlichen wärmeleitenden Metall.

3. Einrichtung nach Anspruch 1 oder 2, **dadurch gekennzeichnet, dass** die Kühleinheit eine Isolationsschicht (14) zwischen der Außenschicht (13) und der Innenschicht (15) einschließt, wobei die Isolationsschicht (14) mindestens eines der folgenden Materialien einschließt: Vakuum-Isolationspaneele, Aerogel-Matten, Aerogel-Granulat oder ein anderes effizientes Isolationsmaterial, wie Polyurethanschaum oder einen anderen wärmeisolierten Schaum.

4. Einrichtung nach einem vorstehenden Anspruch, **dadurch gekennzeichnet, dass** die Kühleinheit (8) aus spritzgegossenen, thermogeformten oder anderweitig thermisch vakuumierten Kunststoffen oder Verbundwerkstoffen mit Isolatormaterial im Inneren hergestellt ist.

5. Einrichtung nach einem vorstehenden Anspruch, **dadurch gekennzeichnet, dass** eine innenseitige Schicht (15) der Kühleinheit (8) aus Metall, wie Aluminium, Stahl, Kupfer, Eisen oder einem anderen, herkömmlich verwendeten wärmeleitenden Metall, Kohlefaser oder einem anderen wärmeleitenden Material hergestellt ist.

6. Einrichtung nach einem vorstehenden Anspruch, **dadurch gekennzeichnet, dass** eine Isolierschicht (14) eine Wärmeleitfähigkeit von weniger als 0,02 W/(m K) aufweist.

7. Einrichtung nach einem vorstehenden Anspruch, **dadurch gekennzeichnet, dass** die Magnete (11) eine magnetische Feldstärke von weniger als 0,002 G in einem Abstand von 7 Fuß von einem beliebigen Punkt auf der Oberfläche des Pakets aufweisen.

8. Einrichtung nach einem vorstehenden Anspruch, **dadurch gekennzeichnet, dass** die Einrichtung im Inneren eines Flugzeug-Servierwagens (1, 2) angeordnet ist.

9. Einrichtung nach einem vorstehenden Anspruch, **dadurch gekennzeichnet, dass** die mindestens eine Metallplatte (7), die Gadolinium einschließt, dauerhaft mit der Rückwand eines Flugzeug-Servierwagens (1, 2) oder mit der Vordertür des Servierwagens (1, 2) verbunden ist.

10. Einrichtung nach einem vorstehenden Anspruch, **dadurch gekennzeichnet, dass** die Magnete (11) in direktem thermischen Kontakt sowohl mit dem Inneren der Kühleinheit (8) als auch mit der Metallplatte (7) stehen.

11. Verfahren, wobei
eine Kühleinheit (8), einschließlich
- mindestens eines Behälters für Trockeneis (12),
- Permanentmagnete (11) auf der Außenoberfläche,
in Verbindung mit mindestens einer Metallplatte (7), die Gadolinium einschließt, durch lösbare Verbindung mit den Magneten (11) der Kühleinheit (8) eingerichtet ist.

12. Verfahren nach Anspruch 11, **dadurch gekennzeichnet, dass** die Metallplatte Gadoliniumin Gd₅(Si₂Ge₂)-Legierung oder eine Legierung von Gadoliniumin mit mindestens einem der folgenden Materialien einschließt: Aluminium, Stahl, Kupfer, Eisen oder einem anderen ähnlichen wärmeleitenden Metall.

13. Verfahren nach Anspruch 11 oder 12, **dadurch gekennzeichnet, dass** die Kühleinheit eine Isolationsschicht (14) zwischen der Außenschicht (13) und der Innenschicht (15) einschließt, wobei die Isolationsschicht (14) mindestens eines der folgenden Materialien einschließt: Vakuum-Isolationspaneele, Aerogel-Matten, Aerogel-Granulat oder ein anderes effizientes Isolationsmaterial, wie Polyurethanschaum oder einen anderen wärmeisolierten Schaum.

14. Verfahren nach einem vorstehenden Anspruch **dadurch gekennzeichnet, dass** die Kühleinheit (8) aus spritzgegossenen, thermogeformten oder anderweitig thermisch vakuumierten Kunststoffen oder Verbundwerkstoffen mit Isolatormaterial im Inneren hergestellt ist.

15. Verfahren nach einem vorstehenden Anspruch, **dadurch gekennzeichnet, dass** eine innenseitige Schicht (15) der Kühleinheit (8) aus Metall, wie Aluminium, Stahl, Kupfer, Eisen oder einem anderen, herkömmlich verwendeten wärmeleitenden Metall, Kohlefaser oder einem anderen wärmeleitenden Material hergestellt ist.

## Revendications

1. Appareil comprenant :
- une unité de refroidissement (8) incluant
- au moins un contenant pour de la glace sèche (12), **caractérisé par**
- des aimants permanents (11) sur la surface extérieure ;
- au moins une plaque métallique (7) incluant du gadolinium en raccordement détachable avec les aimants (11) de l'unité de refroidissement (8).

2. Appareil selon la revendication 1, **caractérisé en ce que** la plaque métallique inclut un alliage de gadoliniumine Gd₅(Si₂Ge₂) ou un alliage de gadoliniumine avec au moins l'un des matériaux suivants : de l'aluminium, de l'acier, du cuivre, du fer ou un autre métal à conductivité thermique similaire.

3. Appareil selon la revendication 1 ou 2, **caractérisé en ce que** l'unité de refroidissement inclut une couche d'isolation (14) entre une couche extérieure (13) et une couche intérieure (15), la couche d'isolation (14) incluant au moins l'un des matériaux suivants : des panneaux d'isolation sous vide, des couvertures d'aérogel, des granules d'aérogel ou d'autres matériaux d'isolation efficaces, tels que la mousse de polyuréthane ou une autre mousse à isolation thermique.

4. Appareil selon une quelconque revendication précédente, **caractérisé en ce que** l'unité de refroidissement (8) est fabriquée à partir de matières plastiques ou de composites moulés par injection, thermoformés ou autrement formés par vide thermique, avec un matériau isolant à l'intérieur.

5. Appareil selon une quelconque revendication précédente, **caractérisé en ce qu'**une couche intérieure (15) de l'unité de refroidissement (8) est fabriquée à partir d'un métal, tel que l'aluminium, l'acier, le cuivre, le fer ou un autre métal à conductivité thermique couramment utilisé, une fibre de carbone ou un autre matériau à conductivité thermique.

6. Appareil selon une quelconque revendication précédente, **caractérisé en ce qu'**une couche d'isolation (14) présente une conductivité thermique inférieure à 0,02 W/(m K).

7. Appareil selon une quelconque revendication précédente, **caractérisé en ce que** les aimants (11) présentent une force de champ magnétique inférieure à 0,002 G à une distance de 7 ft de tout point sur la surface du paquet.

8. Appareil selon une quelconque revendication précédente, **caractérisé en ce que** l'appareil est positionné à l'intérieur d'un chariot d'aéronef (1, 2).

9. Appareil selon une quelconque revendication précédente, **caractérisé en ce que** la au moins une plaque métallique (7) incluant du gadolinium est raccordée de manière permanente sur la paroi arrière d'un chariot d'aéronef (1, 2) ou sur la porte avant du chariot (1, 2).

10. Appareil selon une quelconque revendication précédente, **caractérisé en ce que** des aimants (11) sont en contact thermique direct à la fois avec l'intérieur de l'unité de refroidissement (8) et avec la plaque métallique (7).

11. Procédé, dans lequel
une unité de refroidissement (8) incluant
- au moins un contenant pour de la glace sèche (12),
- des aimants permanents (11) sur la surface extérieure,
est agencée en raccordement avec au moins une plaque métallique (7) incluant du gadolinium en raccordement détachable avec les aimants (11) de l'unité de refroidissement (8).

12. Procédé selon la revendication 11, **caractérisé en ce que** la plaque métallique inclut un alliage de gadoliniumine Gd₅(Si₂Ge₂) ou un alliage de gadoliniumine avec au moins l'un des matériaux suivants : de l'aluminium, de l'acier, du cuivre, du fer ou un autre métal à conductivité thermique similaire.

13. Procédé selon la revendication 11 ou 12, **caractérisé en ce que** l'unité de refroidissement inclut une couche d'isolation (14) entre une couche extérieure (13) et une couche intérieure (15), la couche d'isolation (14) incluant au moins l'un des matériaux suivants : des panneaux d'isolation sous vide, des couvertures d'aérogel, des granules d'aérogel ou d'autres matériaux d'isolation efficaces, tels que la mousse de polyuréthane ou une autre mousse à isolation thermique.

14. Procédé selon une quelconque revendication de procédé précédente, **caractérisé en ce que** l'unité de refroidissement (8) est fabriquée à partir de matières plastiques ou de composites moulés par injection, thermoformés ou autrement formés par vide thermique, avec un matériau isolant à l'intérieur.

15. Procédé selon une quelconque revendication de procédé précédente, **caractérisé en ce qu'**une couche intérieure (15) de l'unité de refroidissement (8) est fabriquée à partir d'un métal, tel que l'aluminium, l'acier, le cuivre, le fer ou un autre métal à conductivité thermique utilisé couramment utilisé, une fibre de carbone ou un autre matériau à conductivité thermique.
